# DEMANDE DE BREVET EUROPEEN

(11) **EP 0 899 957 A1**
(43) Date de publication de la demande: **03.03.1999**
(21) Numéro de dépôt: 98202828.4
(22) Date de dépôt: 24.08.1998
(51) Int. Cl.: H04N 7/20, H04N 5/38, H04N 7/081

(54) **Dispositif de distribution intérieure de télévision sans fil**

(30) Priorité: 27.08.1997 FR 9710688
(71) Demandeur: Koninklijke Philips Electronics N.V., 5621 BA Eindhoven (NL)
(72) Inventeur: Chanteau, Pierre, 75008 Paris (FR); Dutilleul, Frédéric, 75008 Paris (FR); Finet, Bernard, 75008 Paris (FR)
(74) Mandataire: Caron, Jean

(57) **Abrégé**

Le dispositif comporte un émetteur (7) qui émet une onde modulée à partir de signaux vidéo (3) et audio (4,5) prélevés dans un téléviseur, et un récepteur (14) qui délivre des signaux démodulés à un second téléviseur (8).
L'émetteur (7) ajoute aux signaux de télévision une porteuse additionnelle qui est modulée par un code numérique, et le récepteur (14) sépare cette porteuse additionnelle, en vérifie le code, et bloque la fourniture du signal vidéo démodulé au second téléviseur (8) si ce code n'est pas correct.

Applications : un tel dispositif évite la pose de câbles à l'intérieur d'un logement pour alimenter un second téléviseur.

## Description

La présente invention concerne un émetteur d'ondes pour un dispositif de distribution intérieure de télévision sans fil, muni d'un modulateur pour moduler les dites ondes avec un signal vidéo en bande de base et au moins un signal de porteuse-son, prélevés à partir d'un appareil de télévision.

Elle concerne également un récepteur d'ondes émises par un émetteur d'un dispositif de distribution intérieure de télévision sans fil, muni d'un démodulateur pour démoduler les dites ondes et délivrer des signaux démodulés à un appareil de télévision.

Un dispositif de distribution intérieure de télévision sans fil est connu. Il permet, lorsqu'un usager déjà équipé d'une installation de télévision avec un premier téléviseur souhaite installer un second téléviseur, d'éviter la pose de câbles pour amener un signal d'entrée à ce second téléviseur, avec des perçages de cloisons et d'autres dégradations à craindre.

Plusieurs fréquences sont disponibles pour l'émetteur d'ondes, au choix de l'usager, de façon à pouvoir changer de fréquence en cas de perturbations du dispositif par un autre dispositif identique installé dans le voisinage.

Un objet de l'invention est d'éviter l'inconvénient suivant : si un usager et un autre usager voisin sont tous deux équipés de dispositifs identiques, il peut se faire que l'un deux, volontairement, utilise dans son récepteur la même fréquence que celle de l'autre dispositif dans le but de recevoir des émissions reçues par l'autre usager et qu'il ne devrait normalement pas recevoir : par exemple des émissions cryptées et payantes, ou des émissions par satellite pour lesquelles il n'est pas équipé. En outre cela pose un problème de confidentialité, car un usager peut savoir ce que regarde son voisin. L'invention a pour but d'éviter cette possibilité.

A cet effet, l'émetteur est muni de moyens pour ajouter un signal additionnel aux signaux prélevés à partir de l'appareil et pour moduler le dit signal additionnel par un code numérique, et le récepteur est muni de moyens pour séparer dans les signaux démodulés un signal additionnel codé, pour en vérifier le code, et pour altérer la fourniture d'au moins un des signaux démodulés au téléviseur si le code n'est pas correct.

Des modes particuliers de réalisation de l'invention apparaissent dans les revendications dépendantes 2 à 6, et 8 à 10.

Ces aspects de l'invention ainsi que d'autres aspects plus détaillés apparaîtront plus clairement grâce à la description suivante d'un mode de réalisation constituant un exemple non limitatif.
La figure 1 représente schématiquement un ensemble de distribution intérieure de télévision sans fil avec en A un ensemble émetteur et en B un ensemble récepteur.
La figure 2 représente schématiquement un mode de réalisation d'un émetteur.
La figure 3 représente schématiquement un mode de réalisation d'un récepteur.
La figure 4 représente schématiquement un autre mode de réalisation d'un émetteur.
La figure 5 représente schématiquement un autre mode de réalisation d'un récepteur.
La figure 6 représente en détail un générateur de sous-porteuse d'un émetteur.
La figure 7 représente en détail un décodeur de sous-porteuse d'un récepteur.

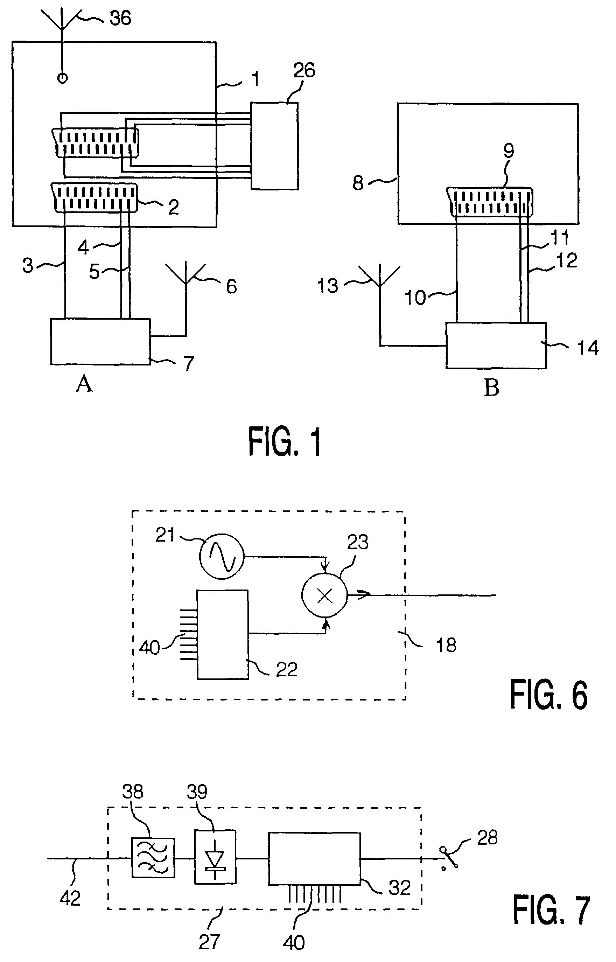

L'ensemble représenté par la figure 1 comporte un premier téléviseur 1, équipé d'une antenne 36 et par exemple d'un décodeur d'émissions cryptées 26. Il pourrait être éventuellement équipé d'un récepteur-décodeur pour la réception d'émissions par satellite, non représenté. Un second téléviseur 8 ne requiert pas d'antenne ni de décodeur car il reçoit des images à partir du téléviseur 1, quelle qu'en soit l'origine (l'antenne, ou un des décodeurs), grâce à un dispositif de distribution intérieure de télévision sans fil. Ce dispositif comprend en A un émetteur d'ondes 7, qui prélève en bande de base des signaux vidéo sur un conducteur 3 et des signaux audio sur des conducteurs 4 et 5, à partir d'une prise 2 dite "péritélévision" d'un premier appareil de télévision 1, et en B un récepteur d'ondes 14, qui délivre en bande de base des signaux vidéo sur un conducteur 10 et des signaux audio sur des conducteurs 11 et 12, vers une prise "péritélévision" 9 du second téléviseur 8.

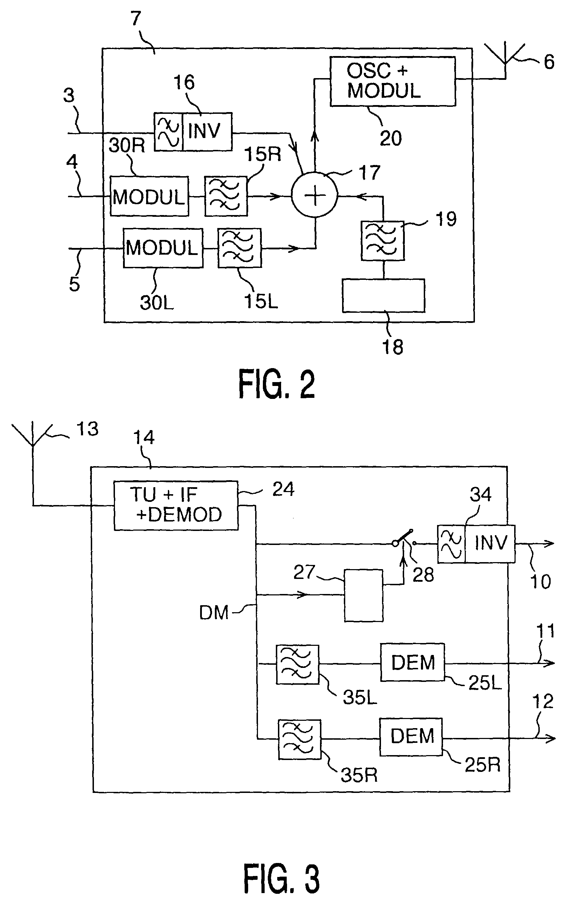

Un mode de réalisation de l'émetteur 7 est représenté par la figure 2. Il comprend en entrée, sur le conducteur 3 déjà mentionné, un module 16 comprenant un filtre passe-bas dont la fréquence de coupure est de l'ordre de 5 MHz, pour le signal vidéo. Le module 16 peut éventuellement comprendre un inverseur pour inverser la polarité du signal vidéo avant de l'appliquer au modulateur. Sur les conducteurs 4, 5 déjà mentionnés, des modulateurs 30R, 30L connus en soi fournissent des porteuses modulées en fréquence, par exemple à 6 MHz et 6,5 MHz, pour les signaux audio respectivement droit et gauche, et sont suivis de filtres passe-bande 15R, 15L, centrés sur 6 et 6,5 MHz. Un signal additionnel constitué d'un train d'impulsions représentant un code secret est créé dans un module 18, qui sera décrit en détail plus loin et délivre le susdit signal additionnel, supporté par une porteuse dont la fréquence est par exemple de 7,02 MHz, qui est filtrée dans un filtre passe-bande 19 centré sur 7,02 MHz. Bien entendu d'autres fréquences peuvent être choisies selon le standard de télévision concerné.

Un additionneur 17 permet d'ajouter les uns aux autres les signaux issus des éléments 16, 15R, 15L, 19, et un module 20 comprend un oscillateur pour engendrer une onde porteuse et un modulateur pour la moduler, par exemple en fréquence, à partir du signal issu de l'additionneur 17, et l'émettre par une antenne 6. Le module 20 comporte en outre des moyens de réglage, par l'usager ou par un installateur, de la fréquence d'émission, laquelle peut être choisie par exemple dans une gamme allant de 2,4 à 2,48 GHz. Tous les éléments du module 20 sont connus en soi, et ne sont donc pas représentés en détail. Un mode de réalisation du récepteur 14 est représenté par la figure 3. Il

comprend un élément 24 muni de moyens d'amplification, de changement de fréquence, de filtrage et d'un démodulateur, par exemple un démodulateur de fréquence, non décrits en détail, tous ces éléments étant connus en soi. Ce démodulateur fournit sur une connexion DM :
- un signal vidéo démodulé en bande de base,
- les sous-porteuses audio, modulées en fréquence à par exemple à 6 MHz et 6,5 MHz, pour les signaux audio respectivement droit et gauche,
- la sous-porteuse à 7,02 MHz du signal additionnel.

Le signal vidéo démodulé, en bande de base, est amené sur le conducteur 10 déjà mentionné, via un interrupteur 28 et un filtre passe-bas 34 dont la fréquence de coupure est de l'ordre de 5 MHz, éventuellement suivi d'un inverseur pour inverser la polarité du signal vidéo avant de la fournir en sortie (dans le cas où un tel inverseur est prévu dans le module 16 de la figure 2). Les sous-porteuses audio sont amenées, via des filtres passe-bande 35R, 35L centrés sur 6 et 6,5 MHz, à des démodulateurs 25R, 25L qui délivrent à leur tour en sortie des signaux audio en bande de base sur les conducteurs 11, 12 déjà mentionnés. La sous-porteuse du signal additionnel est amenée à un module 27 qui commande l'interrupteur 28. Ce module 27 sera décrit plus loin.

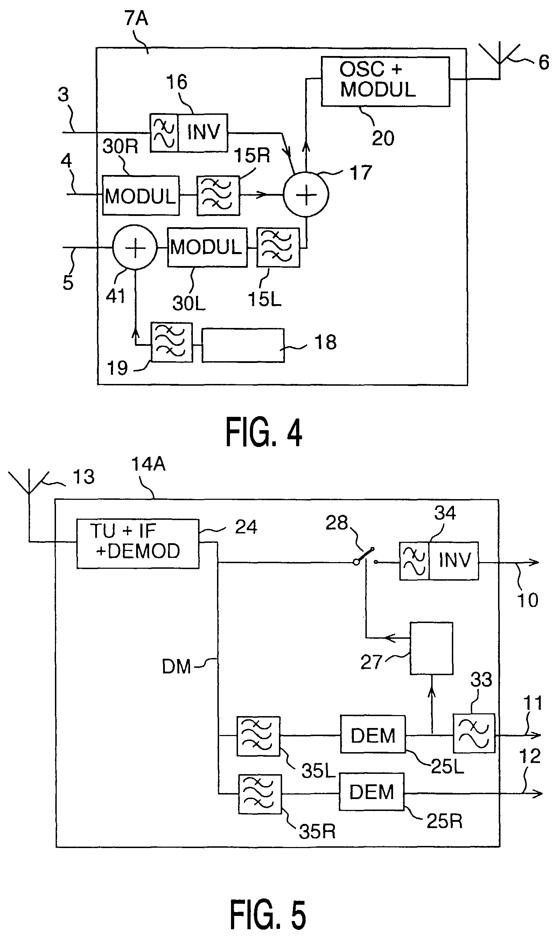

Un autre mode de réalisation d'un émetteur est représenté en 7A sur la figure 4. Il comprend des éléments identiques à ceux du montage de la figure 2, avec les mêmes références. Toutefois, le susdit signal additionnel issu du module 18 est ici porté par une porteuse dont la fréquence est par exemple de 54 kHz, et qui est modulée en amplitude. En sortie du filtre 19, cette porteuse est ajoutée au signal audio de gauche, dans un additionneur 41. L'additionneur 17 permet d'ajouter les uns aux autres les signaux issus des éléments 16, 15R, 15L, le module 20 réalise les mêmes fonctions que dans le montage de la figure 2.

Un autre mode de réalisation d'un récepteur, correspondant à l'émetteur de la figure 4, est représenté en 14A sur la figure 5. Il comprend des éléments identiques à ceux du montage de la figure 3, avec les mêmes références. Toutefois, le démodulateur 24 ne fournit pas une sous-porteuse du signal additionnel à 7,02 MHz. La sous-porteuse à 54 KhZ est prélevée en sortie du démodulateur 25L de voie audio gauche et appliquée au module 27, qui sera décrit plus loin. Le signal de voie audio gauche est filtré en sortie par un filtre passe-bas 33 dont la fréquence de coupure est de l'ordre de 15 kHz, pour éliminer la sous-porteuse à 54 kHz.

La figure 6 représente plus en détail le module 18 des figures 2 et 4. Il comporte un circuit 22 de codage numérique qui génère un train d'impulsions programmable, représentant un code secret. Le train d'impulsions est programmé au moyen de connexions parallèle 40 représentant un mot numérique et qui peuvent être reliées par exemple à des niveaux logiques haut ou bas, par différents moyens tels que des interrupteurs, des barrettes de connexion, des ponts soudés, etc. Le train d'impulsions représentant un code secret est appliqué à un modulateur d'amplitude 23 de façon à moduler une porteuse engendrée par un oscillateur 21. La modulation est faite sur une porteuse à 7,02 MHz, dans le cas du montage de la figure 2, ou bien sur une porteuse à 54 kHz, dans le cas du montage de la figure 4.

La figure 7 représente plus en détail le module 27 des figures 3 et 5. Il comporte en entrée un filtre passe-bande 38 centré sur 7,02 MHz dans le cas du montage de la figure 3, ou sur 54 kHz dans le cas du montage de la figure 5, suivi d'un démodulateur d'amplitude 39, qui reconstitue le susdit train d'impulsions représentant un code secret, et est suivi d'un circuit 32 qui vérifie si ce train d'impulsions correspond à un code prédéterminé représentant un code secret, et ouvre l'interrupteur 28 pour bloquer la fourniture du signal vidéo démodulé si le code n'est pas correct. Bien entendu, d'autres moyens pour altérer les signaux fournis au second téléviseur peuvent facilement être imaginés et mis en oeuvre à la place de l'interrupteur 28 : blocage de voie audio, ajout d'un signal parasite, etc.

Il peut avantageusement être fait usage d'un circuit intégré qui comprend à la fois le circuit 22 et le circuit 32 des figures 4 et 7, par exemple le circuit connu sous la référence "TEA5500", qui est dénommé en Anglais "Coded locking circuit for security systems", et est prévu essentiellement pour la télécommande des portières de véhicules automobiles. Il peut générer un train d'impulsions programmable, et également vérifier un tel train, et il est programmé au moyen de connexions parallèle, comme décrit plus haut.

## Revendications

1. Émetteur d'ondes pour un dispositif de distribution intérieure de télévision sans fil, muni d'un modulateur pour moduler les dites ondes avec un signal vidéo en bande de base et au moins un signal de porteuse-son, prélevés à partir d'un appareil de télévision, caractérisé en ce qu'il est muni de moyens pour ajouter un signal additionnel aux signaux prélevés à partir de l'appareil et pour moduler le dit signal additionnel par un code numérique.

2. Émetteur selon la revendication 1, caractérisé en ce qu'il est muni de moyens pour ajouter le signal additionnel dans la porteuse-son.

3. Émetteur selon la revendication 1, caractérisé en ce que la fréquence du signal additionnel est dans la gamme des fréquences de porteuse-son.

4. Émetteur selon la revendication 2, caractérisé en ce que le signal additionnel est une porteuse à fréquence audio, modulée en amplitude.

5. Émetteur selon la revendication 1, caractérisé en ce qu'il est muni de moyens pour inverser le signal vidéo prélevé avant de l'appliquer au modulateur.

6. Émetteur selon la revendication 1, caractérisé en ce que le codage numérique est réalisé à partir d'un circuit intégré prévu pour gérer des fonctions de sécurité.

7. Récepteur d'ondes émises par un émetteur d'un dispositif de distribution intérieure de télévision sans fil, muni d'un démodulateur pour démoduler les dites ondes et délivrer des signaux démodulés à un appareil de télévision, caractérisé en ce que le récepteur est muni de moyens pour séparer dans les signaux démodulés un signal additionnel codé, pour en vérifier le code, et pour altérer la fourniture d'au moins un des signaux démodulés à l'appareil de télévision si le code n'est pas correct.

8. Récepteur selon la revendication 7, caractérisé en ce que le récepteur est muni de moyens pour séparer dans le signal audio démodulé un signal additionnel codé, pour en vérifier le code, et pour altérer la fourniture d'au moins un des signaux démodulés au téléviseur si le code n'est pas correct.

9. Récepteur selon la revendication 7, caractérisé en ce que la vérification du code numérique est faite à l'aide d'un circuit intégré prévu pour gérer des fonctions de sécurité.

10. Système de distribution intérieure de télévision sans fil, caractérisé en ce qu'il comporte un émetteur selon la revendication 1 et un récepteur selon la revendication 7.
